# EUROPÄISCHE PATENTSCHRIFT

(11) **EP 1 719 928 B1**
(45) Veröffentlichungstag und Bekanntmachung des Hinweises auf die Patenterteilung: **04.03.2009**
(21) Anmeldenummer: 06006462.3
(22) Anmeldetag: 29.03.2006
(51) Int. Cl.: F16D 3/38

(54) **Axialsicherungsanordnung für eine Lagerbüchse bei einem Kreuzgelenk**
Axial retention arrangement for the bearing bush of a Hooke's joint
Dispositif de maintien axial pour un coussinet de palier d'un joint universel

(30) Priorität: 04.05.2005 DE 102005021376
(43) Veröffentlichungstag der Anmeldung: 08.11.2006
(73) Patentinhaber: Spicer Gelenkwellenbau GmbH, 45143 Essen (DE)
(72) Erfinder: Schultze, Hans-Jürgen, 46240 Bottrop (DE); Müller, Erhard, 45529 Hattingen (DE); Neises, Andreas, Dr., 51467 Bergisch Gladbach (DE); Schäfer, Lars Christoph, 45527 Hattingen (DE)
(74) Vertreter: Harwardt, Günther

(56) Entgegenhaltungen:
- DE-C1- 10 223 848
- GB-A- 2 058 294
- GB-A- 2 184 200

## Beschreibung

Die Erfindung betrifft eine Axialsicherungsanordnung für eine Lagerbüchse in einer eine Bohrungswand bildenden durchgehenden Lagerbohrung eines Gabelarmes einer zu einem Kreuzgelenk gehörenden Gelenkgabel oder eines Lagerelementes mittels eines Sicherungsringes.

Eine solche Axialsicherungsanordnung ist in der gattungsgemäßen GB 2 184 200 beschrieben.

Eine solche Axialsicherungsordnung ist weiterhin in der US 2005/0037850 A1 beschrieben. Dabei ist eine Lagerbüchse vorgesehen, die eine Außenfläche aufweist, mit der sie in der Lagerbohrung des Gabelarmes eines Kreuzgelenkes aufgenommen ist. Die Lagerbohrung bildet eine Längsachse, entlang der die Lagerbüchse von der radial äußeren Seite des Gabelarmes in die Lagerbohrung eingeschoben wird. In der Laberbohrung befindet sich im Abstand zu der radial äußeren Seite des Gabelarmes eine Ringnut, in die ein Sicherungsring eingesetzt wird, der sich an dem Boden der Lagerbüchse abstützt. Der Sicherungsring ist massiv gestaltet und weist einen im Querschnitt gesehen treppenartig abgestuften Außendurchmesser auf, der dazu genutzt wird, Toleranzen auszugleichen, um die beiden auf einer Achse angeordneten Lagerbüchsen auf die Drehachse der Gelenkgabel ausrichten und darüber hinaus die erforderlichen Spielverhältnisse einstellen zu können. Eine solche Bauform hat zwar den Vorteil, dass im Verhältnis zu gängigen Montagearten, bei denen unterschiedlich starke Sicherungsringe genutzt werden, nur der Einsatz einer oder weniger Arten von Sicherungsarten erforderlich ist. Sie erfordert jedoch gleichzeitig entsprechend tiefe Ringnuten in der Lagerbohrung. Insgesamt ist ein großer Versatz der Ringnut von der radial äußeren Seite der Gabelarme erforderlich, so dass bei einer vorgegebenen Drehmomentkapazität eines solchen Kreuzgelenkes große Rotationsdurchmesser erforderlich werden, da die Lagerbüchse abhängig von der Drehmomentkapazität über eine bestimmte Länge entlang der Längsachse der Lagerbohrung unterstützt werden muss.

Der Erfindung liegt daher die Aufgabe zugrunde, eine Axialsicherungsanordnung für eine Lagerbüchse bei einem Kreuzgelenk vorzuschlagen, bei der die Montage vereinfacht ist und bei der darüber hinaus bei vorgegebenen Abmaßen, d.h. vorgegebenem Rotationsdurchmesser, eine Vergrößerung der Lagerlebensdauer oder bei gleicher Drehmomentübertragungsfähigkeit ein geringerer Bauraum, d.h. Rotationsdurchmesser, erzielbar ist.

Gelöst wird diese Aufgabe erfindungsgemäß durch eine Axialsicherungsanordnung für eine Lagerbüchse in einer eine Bohrungswand bildenden durchgehenden Lagerbohrung eines Gabelarmes einer zu einem Kreuzgelenk gehörenden Gelenkgabel oder eines Lagerelementes mittels eines Sicherungsringes, wobei
- die Lagerbüchse eine Außenfläche aufweist, mit der sie in der Lagerbohrung sitzt,
- die Lagerbohrung eine Längsachse bildet,
- die Bohrungswand der Lagerbohrung oder die Außenfläche der Lagerbüchse eine auf der Längsachse zentrierte Ringnut aufweisen,
- der Sicherungsring
   - einen ersten Ringabschnitt aufweist, der in der Ringnut gehalten ist,
   - mindestens einen an den ersten Ringabschnitt angeschlossenen, in radialer Richtung federnden zweiten Ringabschnitt aufweist, der mindestens eine Eingriffskante bildet, die je nach Zuordnung der Ringnut gegen die Bohrungswand oder die Außenfläche drückt.

Der Vorteil bei dieser Gestaltung ist der Entfall eines Sicherungsringes, der sich axial entlang der Längsachse der Lagerbohrung an die Lagerbüchse anschließt. Daher kann für den Einbau und die Unterstützung der Lagerbüchse die gesamte Länge der Lagerbohrung entlang der Längsachse genutzt werden. Dies führt zu einer Steigerung des übertragbaren Drehmomentes bei Anwendung bei einem Kreuzgelenk bzw. zu einer Steigerung der Lebensdauer. Ein weiterer Vorteil besteht darin, dass anstelle einer Vielzahl von Sicherungsringen oder wiederholter Montage nur noch eine Art von Sicherungsringen erforderlich ist. Bei Rotation des Kreuzgelenkes auftretende Fliegkräfte führen dazu, dass die Abstützung noch verbessert wird, weil die Eingriffskante weiter in die Außenfläche der Lagerbüchse bzw. bei Montage Zuordnung des Sicherungsringes zur Lagerbüchse in die Bohrungswand der Lagerbohrung einschneidet. Die Verkrallung in der Bohrungswand bzw. der Außenfläche der Lagerbüchse bringt auch den weiteren Vorteil mit sich, dass ein Drehen der Lagerbüchse bei der hin und her gehenden Drehbewegung des Lagerzapfens des Zapfenkreuzes um die Längsachse der Lagerbohrung und damit Passungsrost verhindert werden.

Insgesamt ergibt sich auch ein Vorteil bei der Montage, denn lediglich durch Eindrücken der Lagerbüchsen ist eine zentrische Montage möglich, welche zu geringen Unwuchten führt, so dass nach der Montage weniger Wuchtläufe und weniger Wuchtgewichte erforderlich werden. Dies führt insgesamt zu einer Kostenreduzierung.

In Ausgestaltung der Erfindung ist vorgesehen, dass ein Abschnitt der Bohrungswand oder der Außenfläche einen Kontaktbereich für die Eingriffskante des Sicherungsringes bildet, wobei der Kontaktbereich aufgerauht ist oder mit einer Rändelung oder mit Umfangsrillen versehen ist.

Hierdurch ist es möglich, den Eingriff der Eingriffskante(n) in die Gegenoberfläche, d.h. die Bohrungswand der Lagerbohrung oder die Außenfläche der Lagerbüchse zu vergrößern, so dass eine sichere Halterung entlang der Längsachse gegeben ist. Dabei kann der Kontaktbereich vorzugsweise so gestaltet werden, dass er nicht über den übrigen Bereich der Außenfläche der Lagerbüchse oder Bohrungswand vorsteht, so dass die entsprechende Gegenfläche nicht beschädigt wird, wenn die Lagerbüchse in die Lagerbohrung eingeschoben wird. Ein weiterer Vorteil der Anordnung besteht auch darin, dass die Ringnut praktisch an beliebiger Stelle entlang der Längsachse der Lagerbohrung in der Lagerbohrung selbst oder aber in der Außenfläche der Lagerbüchse angeordnet werden kann.

Eine günstige Ausgestaltung sieht vor, dass der die Eingriffskante aufweisende mindestens eine zweite Ringabschnitt gegenüber dem ersten Ringabschnitt bzw. die Bohrungswand im eingebauten Zustand mit einem Winkel verläuft, der größer als 7° ist und kleiner als 90° ist.

Hierdurch wird gewährleistet, dass bei Einwirken von Kräften auf die Lagerbüchse entgegen der Einschubrichtung ein sicheres und weiteres Eindringen der Eingriffskante in die entsprechende Gegenfläche, d.h. die Bohrungswand oder die Außenfläche der Lagerbüchse eintritt.

Die Erfindung sieht zwei Ausgestaltungen hinsichtlich der Zuordnung der Ringnut zur Aufnahme des Sicherungsringes vor. Bei einer ersten Ausführungsform ist vorgesehen, dass dann, wenn die Ringnut in der Bohrungswand der Lagerbohrung angeordnet ist, die Eingriffskante des Sicherungsrings einem Einführende der Lagerbohrung, durch die die Lagerbüchse in die Lagerbohrung eingeführt wird, abgewandt ist.

Bei einer zweiten Ausführungsform ist vorgesehen, dass dann, wenn die Ringnut in der Außenfläche der Lagerbüchse angeordnet ist, die Eingrifflcante des Sicherungsrings einem Einführende der Lagerbohrung, durch die die Lagerbüchse in die Lagerbohrung eingeführt wird, zugewandt ist.

Zur Erleichterung der Montage des Sicherungsringes in der die ihn aufnehmenden Ringnut ist vorgesehen, dass der Sicherungsring in Richtung der Längsachse an einer Stelle getrennt ist. Günstig ist, wenn der Sicherungsring aus Blech geformt ist, wobei der mindestens eine zweite Ringabschnitt zum ersten Ringabschnitt im Längsschnitt ein V bildend abgewinkelt ist. Alternativ hierzu kann der Sicherungsring so ausgebildet sein, dass der erste Ringabschnitt massiv ist und der zumindest eine zweite Ringabschnitt einstückig angeschlossen ist, welcher die Eingriffskante aufweist.

Die Eingriffskante kann scharf ausgebildet werden, so dass entgegen der Einschubrichtung der Lagerbüchse in die Lagerbohrung einwirkende Kräfte zu einem Eindringen in die Gegenoberfläche führen, was die Sicherung noch verstärkt.

Gelöst wird die der Erfindung zugrunde liegende Aufgabe auch durch eine Axialsicherungsanordnung für eine Lagerbüchse mit einer eine Bohrungswand bildenden durchgehenden Lagerbohrung eines Gabelarmes einer zu einem Kreuzgelenk gehörenden Gelenkgabel oder eines Lagerelementes, wobei
- die Lagerbüchse eine Außenfläche aufweist, mit der sie in der Lagerbohrung sitzt,
- die Lagerbohrung eine Längsachse bildet,
- die Lagerbohrung ein Einführende für die Lagerbüchse bildet,
- die Bohrungswand der Lagerbohrung in Richtung zum Einführen über den Umfang mit axial entlang der Längsachse versetzten ersten Zähnen versehen ist, deren Spitzen nicht über die übrige Fläche der Bohrungswand in Richtung zur Längsachse vorstehen,
- die Lagerbüchse an einem in einer Einführrichtung in die Lagerbohrung gesehen hinteren Ende mit den ersten Zähnen zusammenwirkende zweite Zähnen auf der Außenfläche aufweist, die zwischen die ersten Zähne eingreifen und entsprechend über die Außenfläche der Lagerbüchse von der Längsachse weg vorstehen. Dabei ähnliche Vorteile eine, wie sie bei der zuvor geschilderten erfindungsgemäßen Lösung gegeben sind.

Vorzugsweise sind die Zähne wie ein Sägezahn gestaltet. Die steilen Flanken sorgen für die Abstützung.

Bevorzugte Ausführungsbeispiele der Erfindung sind in der Zeichnung schematisch dargestellt.

Es zeigt,
- Figur 1: die Darstellung einer Gelenkwelle mit zwei Kreuzgelenken,
- Figur 2: das Detail von Figur 1 bezüglich einer ersten Anordnungsmöglichkeit des Sicherungsringes,
- Figur 3: das Detail gemäß Figur 1 bezüglich einer zweiten Ausführungsform hinsichtlich der Anordnung des Sicherungsringes,
- Figur 4: den Sicherungsring, der bei der Ausgestaltung gemäß Figur 2 genutzt wird, in Zuordnung zur Lagerbohrung im vergrößerten Maßstab,
- Figur 5: eine Einzelheit gemäß Figur 1 für eine Anordnung eines Sicherungsringes gemäß Figur 2, wobei jedoch der Kontaktbereich an der Außenfläche der Lagerbüchse mit Rillen versehen ist,
- Figur 6: das Detail gemäß Figur 1, jedoch für eine weitere Ausführungsform eines Sicherungsringes und
- Figur 7: eine weitere erfindungsgemäße Axialsicherungsanordnung für eine Lagerbüchse in einer Lagerbohrung.

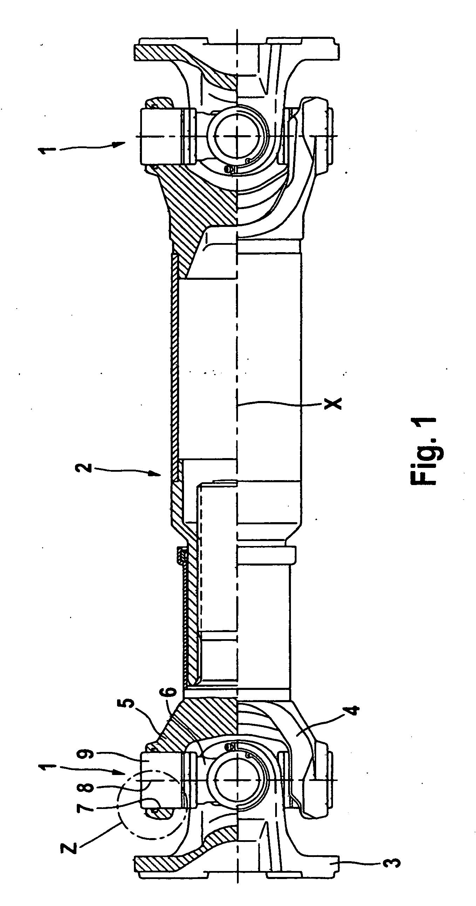

Figur 1 zeigt eine Gelenkwelle bestehend aus zwei Kreuzgelenken 1 an den Enden und einem zwischen beiden angeordneten Längenausgleich 2. Die beiden Kreuzgelenke 1 sind im wesentlichen gleich gestaltet. Lediglich die Anschlüsse zum Längenausgleich 2 unterscheiden sich. Alle Bauteile sind auf einer Drehachse X ausgerichtet dargestellt. Nachfolgend wird nur das in der Zeichnungsfigur 1 links dargestellte Kreuzgelenk 1 näher beschrieben.

Das Kreuzgelenk 1 umfasst eine erste Gelenkgabel 3, die mit einem Flansch versehen ist, der zum Anschluss an ein treibendes oder angetriebenes Bauteil dient. Es umfasst ferner die zweite Gelenkgabel 4, welche einen Zapfen aufweist, der einen Bestandteil des Längenausgleichs 2 bildet.

Beide Gelenkgabeln 3, 4 weisen jeweils zwei Gabelarme 5 auf, die jeweils Lagerbohrungen 7 besitzen. Die Lagerbohrungen 7 der beiden Gabelarme 5 jeweils einer Gelenkgabel 3, 4 sind auf einer gemeinsamen Längsachse 8 zentriert. Die Gabelarme der beiden Gelenkgabeln 3, 4 sind zueinander um 90° um die Achse X versetzt angeordnet.

Die beiden Gelenkgabeln 3, 4 werden durch eine Zapfenkreuzgarnitur 6 miteinander verbunden, welche ein Zapfenkreuz umfasst, dass vier Zapfen aufweist, die rechtwinklig zueinander stehen und auf denen jeweils eine Lagerbüchse 9 angeordnet ist, und zwar unter Zwischenschaltung von Wälzkörpern und einer Abdichtung. Jede Lagerbüchse 9 ist in einer Lagerbohrung 7 aufgenommen und durch einen nicht näher dargestellten Sicherungsring in der Lagerbohrung 7 gesichert.

Die Sicherung einer der Lagerbüchsen 9 wird nachfolgend anhand weiterer Zeichnungsfiguren erläutert, wobei diese repräsentativ für die Lagerbüchsen beider Kreuzgelenke 1 ist.

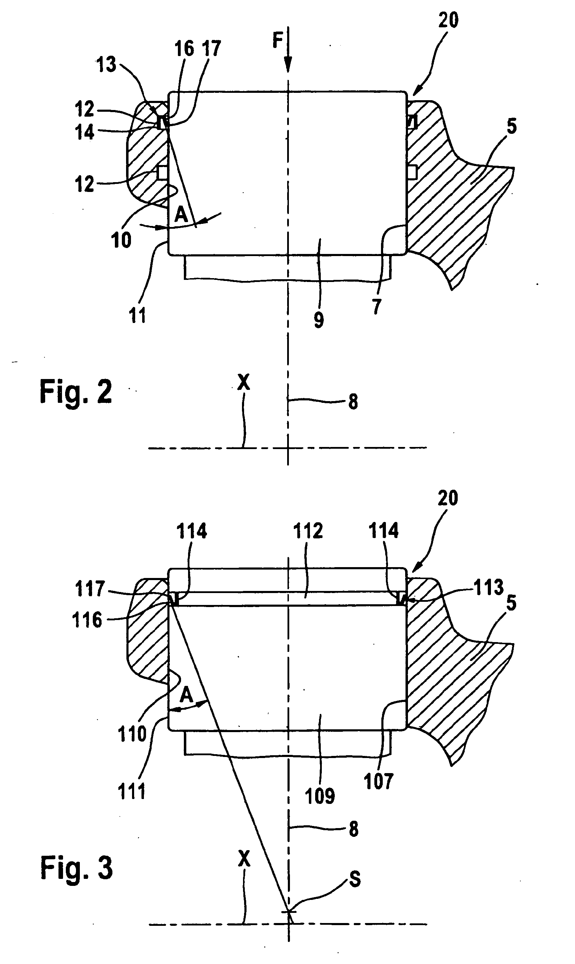

Figur 2 zeigt eine erste Ausgestaltungsmöglichkeit für eine Axialsicherungsanordnung gemäß der Erfindung. Dabei ist ein Abschnitt eines Gabelarmes 5 einer Gelenkgabel dargestellt. In dem Gabelarm 5 befindet sich eine auf der Längsachse 8 zentrierte Lagerbohrung 7, die die Bohrungswand 10 aufweist und voll durch den Gabelarm 5 hindurchverläuft, und zwar zwischen der der Drehachse X zugewandten Innenfläche und der der Drehachse X abgewandten Außenfläche des Gabelarmes 5. Die Öffnung der Lagerbohrung 8 in diesem Bereich bildet das Einführende 20 für eine Lagerbüchse 9. Die Lagerbüchse 9 wird von diesem Einführende 20 aus in Einschubrichtung F in die Lagerbohrung 7 eingeschoben. Sie weist eine Außenfläche 11 auf, mit der sie an der Bohrungswand 10 der Lagerbohrung 7 anliegt.

Die Sicherung erfolgt durch die folgende Anordnung. In der Lagerbohrung 7 befindet sich zum Einführende 20 hin eine Ringnut 12. In dieser Ringnut 12 sitzt ein Sicherungsring 13, der einen ersten Ringabschnitt 14 aufweist, der in etwa zylindrisch gestaltet ist und in der Ringnut 12 axial, d.h. in Richtung der Längsachse 8 festgelegt ist. An diesen ersten Ringabschnitt 14 schließen sich vorzugsweise mehrere umfangsverteilte zweite Ringabschnitte 16 an, die an ihren freien Enden jeweils eine Eingriffskante 17 bilden, die in die gegenüberliegende Außenfläche 11 der Lagerbüchse 9 eingreift und ein Austreten der Lagerbüchse 9 bei Einwirken von Fliehkräften oder sonstigen Kräften entgegen der Einschubrichtung F sichern.

Die zweiten Ringabschnitte 16 sind unter einem Winkel A zum ersten Ringabschnitt 14 angeordnet, der sich von dem Einführende 20 weg öffnet. Der Sicherungsring 12 wird nochmals im Detail anhand der Zeichnungsfigur 4 näher beschrieben.

Die Anordnung des Sicherungsringes 13 ist so getroffen, dass die Eingriffskante 17 der zweiten Ringabschnitte 16 von dem Einführende 20 weg weist.

Die Ringnut kann entlang der Längsachse 8 an beliebiger Stelle der Lagerbohrung 7 angeordnet sein. In der Zeichnungsfigur 2 ist, um dies zu zeigen, eine weitere Ringnut 12 weiter weg vom Einführende auf die Drehachse X zu verlagert, eingezeichnet.

Bei der Ausführungsform gemäß Figur 3 besteht der Unterschied zur Ausführungsform gemäß Figur 2 darin, dass die Ringnut 112 nicht in der Bohrungswand 110 der Lagerbohrung 107 im Gabelarm 5 angeordnet ist, sondern sich in der Außenfläche 111 der Lagerbüchse 109 befindet. Die Ringnut 112 nimmt einen Sicherungsring 113 auf; der einen ersten Ringabschnitt 114 aufweist, der in der Ringnut 112 sitzt und am Umfang des ersten Ringabschnittes 114 verteilt ansetzende zweite Ringabschnitte 116 besitzt, an deren freien Enden jeweils eine Eingriffskante 117 vorhanden ist. Die Eingriffskanten 117 greifen in die Bohrungswand 110 der Lagerbohrung 107 ein. Die Lagerbohrung 107 weist selbst keine Ringnut auf. Die Anordnung des Sicherungsringes 113 ist so getroffen, dass die an den zweiten Ringabschnitten 116 befindlichen Eingriffskanten 117 in Richtung zum Einführende 20 weisen. Hierbei sind die zweiten Ringabschnitte 116 zu der Bohrungswand 110 unter einem Winkel A von größer 7° angeordnet, der sich vom Einführende 20 weg öffnet. Die Eingriffskanten 117 weisen zum Einführende hin.

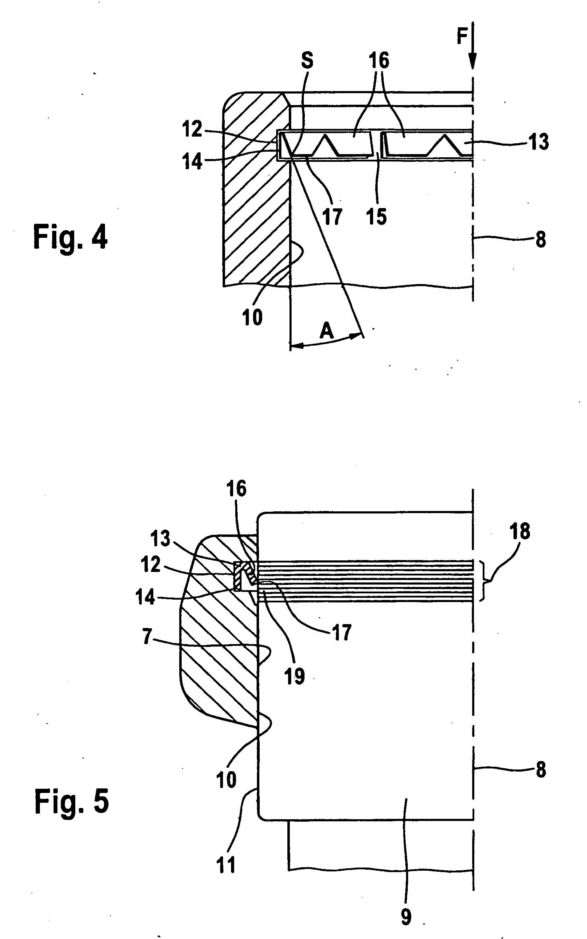

In Figur 4 ist der Sicherungsring 13, so wie er im Zusammenhang mit der Ausführungsform nach Figur 2 benutzt wird, näher dargestellt. Es sind der um die Längsachse 8 umlaufende und mit der Ringnut 12 zum Eingriff kommende erste Ringabschnitt 14 und an diesen ansetzend und auf dessen Umfang verteilt angeordnete zweite Ringabschnitte 16 erkennbar, die an ihren freien Enden jeweils Eingriffskanten 17 bilden. Es ist ferner die V-förmige Anstellung der zweiten Ringabschnitte 16 zur Bohrungswand 10 und damit auch zum ersten Ringabschnitt 14 ausgehend vom Scheitelpunkt S unter dem Winkel A erkennbar. Des weiteren ist erkennbar, dass der Sicherungsring 13 axial geschlitzt ist, d.h. er weist einen Schlitz 15 auf, so dass er zur Montage in der Ringnut 12 zusammengedrückt werden kann, wonach er, wenn er sich im Bereich der Ringnut 12 befindet, wieder seine ursprüngliche Form annimmt.

Durch die Orientierung der zweiten Ringabschnitte 16 ist es möglich, die Lagerbüchse 9 vom Einführende 20 aus in die Lagerbohrung 7 einzuführen, ohne dass die Eingriffskanten 17 der zweiten Ringabschnitte 16 diesem Einschieben einen wesentlichen Widerstand entgegensetzen, da sie aufgrund der elastischen Ausbildung des Sicherungsringes 13 in die Ringnut 12 zurückfedern, wodurch die Andrückkraft aufgebaut wird. Wird jedoch entgegen der Einschubrichtung F gemäß Figur 2 eine Kraft ausgeübt, so verkrallen sich die Eingriffskanten 17 stärker in der Außenfläche 11 der Lagerbüchse 9 und sichern diese gegen radiales Verschieben nach außen von der Drehachse X weg.

Der Unterschied zwischen dem Sicherungsring 13 gemäß Figur 4 und dem Sicherungsring 113 gemäß Figur 3 besteht lediglich darin, dass die zweiten Ringabschnitte 116 nicht innen am ersten Ringabschnitt ansetzen, sondern außen an diesem, und zwar bezogen auf die Längsachse 8.

Vorzugsweise sind die Sicherungsringe 13, 113 aus einem Blechmaterial, das gute Federeigenschaften aufweist, hergestellt, wobei im Längsschnitt des Ringes der erste Ringabschnitt und die zweiten Ringabschnitte ein V bilden.

Figur 5 zeigt eine Ausbildungsvariante, die vergleichbar zu der gemäß Figur 2 ist, wobei zusätzlich auf der Außenfläche 11 der Lagerbüchse 9 Umfangrillen 19, die sich über den Umfang der Lagerbüchse 9 erstrecken, angeordnet sind, in die die Eingriffskanten 17 der zweiten Ringabschnitte 16 des Sicherungsringes 13 eingreifen können. Hierdurch wird eine Vergrößerung der Haltekräfte in Axialrichtung, d.h. entlang der Längsachse 8 entgegen der Einschubrichtung der Lagerbüchse 9 erreicht. Es sind entlang der Längsachse 8 verteilt mehrere solcher Umfangsrillen 19 angeordnet, die zusammen einen Kontaktbereich 18 für den Sicherungsring 13 bilden. Anstelle von Umfangsrillen 19 können auch eine Rändelung oder eine veränderte, d.h. rauhere Oberfläche, vorgesehen sein. Dabei ist jedoch zu beachten, dass die Umfangsrillen 19 bzw. veränderten Oberflächen nicht über den übrigen Bereich der Außenfläche 11 der Lagerbüchse 8 vorstehen. Es muss nämlich verhindert werden, dass der Kontaktbereich 18 beim Einschieben der Lagerbüchse 9 in die Lagerbohrung 7 deren Bohrungswand 10 beschädigt.

Alternativ ist es für die Ausbildung bzw. Anordnung des Sicherungsringes und der Ringnut in der Lagerbüchse gemäß Figur 3 möglich, den Kontaktbereich mit Umfangsrillen oder einer Rändelung oder veränderten Oberflächenrauhheit der Lagerbohrung 107, also deren Bohrungswand 110 zuzuordnen.

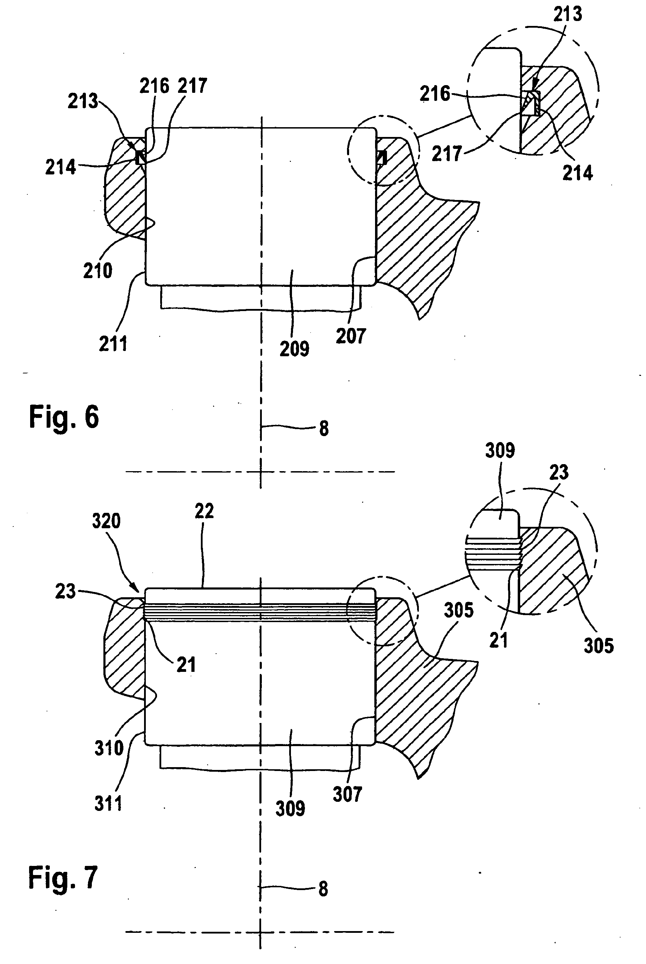

Figur 6 zeigt eine andere Ausgestaltung für den Sicherungsring. Der dort gezeigte Sicherungsring 213 umfasst einen ersten Ringabschnitt 214, der in der zugehörigen Ringnut angeordnet ist und daran ansetzend mindestens einen umlaufenden oder mehrere einzelne zweite Ringabschnitte 216, die an ihrem freien Ende in einer spitzen Eingriffskante 217 enden. In dem in Figur 6 dargestellten Ausführungsbeispiel ist der Sicherungsring 213 ebenfalls geschlitzt, so dass er für die Montage in der zugehörigen Ringnut zusammengedrückt werden kann oder bei einer Montage, wie sie für den Fall vorgesehen ist, dass die Ringnut der Lagerbüchse 209 zugeordnet ist, aufgeweitet werden kann, um auf diese aufgeschoben werden zu können, um in die Ringnut eintauchen zu können. Auch hier ist eine Gestaltung möglich, bei der der oder die zweiten Ringabschnitte 216 am Innenumfang des ersten Ringabschnittes 214 des Sicherungsringes 213 ansetzen, wenn eine Zuordnung entsprechend der Figur 2 erfolgt oder aber am Außenumfang des ersten Ringabschnittes 214 ansetzen, wenn eine Anordnung gemäß Figur 3 und Zuordnung zur Ringnut in der Lagerbüchse gewünscht ist. Hinsichtlich der weiteren Bestandteile und Zuordnung wird auf die Beschreibung zu Figur 2 verwiesen, wobei in Figur 6 Bezugszeichen gewählt wurden, die für vergleichbare Teile um den Zahlenwert 200 zu denen bei Figur 2 erhöht sind.

Figur 7 zeigt eine weitere Lösung gemäß der Erfindung, wobei in dem Gabelarm 305 nahe zum Einführende 320 der Lagerbohrung 307 umlaufend um die Längsachse 8 mehrere erste sägezahnförmige Zähne 21 angebracht sind, die in Richtung zum Einführende 320 steile Flanken aufweisen. Entsprechend ist die Lagerbüchse 309 auf ihrer Außenfläche mit umlaufenden zweiten Zähnen 23 versehen, die sich nahe zum radial außenliegenden Ende 22 der Lagerbüchse 309 befinden und die komplementär zu den ersten Zähnen 21 ausgebildet sind, wobei die zweiten Zähne 23 in Richtung von der Längsachse 8 radial weg nach außen über den übrigen Teil der Außenfläche 311 der Lagerbüchse 309 zum Eingriff mit den ersten Zähnen 21 in der Bohrungswand 310 der Lagerbohrung 307 vorstehen. Die ersten Zähne 21 sind so angeordnet, dass sie nicht über den übrigen Teil der Bohrungswand 310 radial nach innen auf die Längsachse 8 vorstehen, um eine Beschädigung der Außenfläche 311 der Lagerbüchse 309 zu verhindern.

### Bezugszeichenliste

- 1: Kreuzgelenk
- 2: Längenausgleich
- 3: erste Gelenkgabel
- 4: zweite Gelenkgabel
- 5, 305: Gabelarm
- 6: Zapfenkreuzgarnitur
- 7, 107,207,307: Lagerbohrung
- 8: Längsachse
- 9, 109,209,309: Lagerbüchse
- 10, 110, 210, 310: Bohrungswand
- 11, 111, 211, 311: Außenfläche
- 12, 112: Ringnut
- 13, 113,213: Sicherungsring
- 14, 114, 214: erster Ringabschnitt
- 15: Schlitz
- 16, 116,216: zweiter Ringabschnitt
- 17, 117,217: Eingriffskante
- 18: Kontaktbereich
- 19: Umfangsrille
- 20, 320: Einführende
- 21: erste Zähne
- 22: Ende
- 23: zweite Zähne
- X: Drehachse
- F: Einschubrichtung
- A: Winkel
- S: Scheitel

## Patentansprüche

1. Axialsicherungsanordnung für eine Lagerbüchse (9, 109, 209, 309) in einer eine Bohrungswand (10, 110, 210, 310) bildenden durchgehenden Lagerbohrung (7, 107, 207, 307) eines Gabelarmes (5, 305) einer zu einem Kreuzgelenk (1) gehörenden Gelenkgabel (3) oder eines Lagerelementes , wobei
- die Lagerbüchse (9, 109, 209, 309) eine Außenfläche (11, 111, 211, 311) aufweist, mit der sie in der Lagerbohrung (7, 107, 207, 307) sitzt, die Lagerbohrung (7, 107, 207, 307) eine Längsachse (8) bildet,
**dadurch gekennzeichnet, dass**
- die Bohrungswand (10, 110, 210, 310) der Lagerbohrung (7, 107, 207, 307) oder die Außenfläche (11, 111, 211, 311) der Lagerbüchse (9, 109, 209, 309) eine auf der Längsachse (8) zentrierte Ringnut (12, 112) aufweisen, und dass die Axialsicherungsanordnung einen Sicherungsring (13, 113, 213) aufweist, der
- einen ersten Ringabschnitt (14, 114, 214) aufweist, der in der Ringnut (12, 112) gehalten ist,
- mindestens einen an den ersten Ringabschnitt (14, 114, 214) angeschlossenen, in radialer Richtung federnden zweiten Ringabschnitt (16, 116, 216) aufweist, der mindestens eine Eingriffskante (17, 117, 217) bildet, die je nach Zuordnung der Ringnut (12, 112) gegen die Bohrungswand (10, 110, 210, 310) oder die Außenfläche (11, 111, 211, 311) drückt.

2. Axialsicherungsanordnung gemäß Anspruch 1,
**dadurch gekennzeichnet,**
**dass** ein Abschnitt der Bohrungswand (10) oder der Außenfläche (11) einen Kontaktbereich (18) für die Eingriffskante (17) des Sicherungsringes (13) bildet, wobei der Kontaktbereich (18) aufgerauht ist oder mit einer Rändelung oder mit Umfangsrillen (19) versehen ist.

3. Axialsicherungsanordnung nach Anspruch 1,
**dadurch gekennzeichnet,**
**dass** der Kontaktbereich (18) nicht über den übrigen Bereich der Außenfläche (111) der Lagerbüchse (9) oder der Bohrungswand (10) vorsteht.

4. Axialsicherungsanordnung nach Anspruch 1,
**dadurch gekennzeichnet,**
**dass** der die Eingriffskante (17, 117) aufweisende mindestens eine zweite Ringabschnitt (16, 116) gegenüber der Bohrungswand (10, 110) im eingebauten Zustand mit einem Winkel (A) verläuft, der größer als 7° ist und kleiner als 90° ist.

5. Axialsicherungsanordnung nach Anspruch 1,
**dadurch gekennzeichnet,**
**dass** dann, wenn die Ringnut (12) in der Bohrungswand (10, 210) der Lagerbohrung (7, 207) angeordnet ist, die Eingriffskante (17, 217) des Sicherungsrings (13, 213) einem Einführende (20) der Lagerbohrung (7, 207) durch das die Lagerbüchse (9, 209) in die Lagerbohrung (7, 207) eingeführt wird, abgewandt ist.

6. Axialsicherungsanordnung nach Anspruch 1,
**dadurch gekennzeichnet,**
**dass** dann, wenn die Ringnut (112) in der Außenfläche (111) der Lagerbüchse (109) angeordnet ist, die Eingriffskante(n) (117) des Sicherungsrings (113) einem Einführende (20) der Lagerbohrung (107), durch das die Lagerbüchse (109) in die Lagerbohrung (107) eingeführt wird, zugewandt ist.

7. Axialsicherungsanordnung nach Anspruch 1,
**dadurch gekennzeichnet,**
**dass** der Sicherungsring (13, 113, 213) in Richtung der Längsachse (8) an einer Stelle (15) getrennt ist.

8. Axialsicherungsanordnung nach Anspruch 1,
**dadurch gekennzeichnet,**
**dass** der Sicherungsring (13, 113) aus Blech geformt ist, wobei der mindestens eine zweite Ringabschnitt (16, 116) zum ersten Ringabschnitt (14, 114) im Längsschnitt ein V bildend abgewinkelt ist.

9. Axialsicherungsanordnung nach Anspruch 1,
**dadurch gekennzeichnet,**
**dass** der erste Ringabschnitt (214) massiv ausgebildet ist, an den der zumindest eine zweite Ringabschnitt (216) einstückig angeschlossen ist.

10. Axialsicherungsanordnung für eine Lagerbüchse (309) mit einer eine Bohrungswand (310) bildenden durchgehenden Lagerbohrung (307) eines Gabelarmes (305) einer zu einem Kreuzgelenk gehörenden Gelenkgabel oder eines Lagerelementes, wobei
- die Lagerbüchse (309) eine Außenfläche (311) aufweist, mit der sie in der Lagerbohrung (307) sitzt,
- die Lagerbohrung (307) eine Längsachse (8) bildet,
- die Lagerbohrung (307) ein Einführende (320) für die Lagerbüchse (309) bildet,
**dadurch gekennzeichnet, dass**
- die Bohrungswand (310) der Lagerbohrung (307) in Richtung zum Einführende (320) über den Umfang mit axial entlang der Längsachse (309) versetzten ersten Zähnen (21) versehen ist, deren Spitzen nicht über die übrige Fläche der Bohrungswand (310) in Richtung zur Längsachse (8) vorstehen,
und dass
- die Lagerbüchse (309) an einem in einer Einführrichtung in die Lagerbohrung (307) gesehen hinteren Ende (22) mit den ersten Zähnen (21) zusammenwirkende zweite Zähnen (23) auf der Außenfläche (311) aufweist, die zwischen die ersten Zähne (21) eingreifen und entsprechend über die Außenfläche (311) der Lagerbüchse (309) von der Längsachse (8) weg vorstehen.

## Claims

1. Axial retaining arrangement for a bearing bushing (9, 109, 209, 309) in a through extending bearing bore (7, 107, 207, 307), forming a bore wall (10, 110, 210, 310), of a yoke arm (5, 305) of a joint yoke (3) belonging to a universal joint (1) or a bearing element, wherein
the bearing bushing (9, 109, 209, 309) has an outer face (11, 111, 211, 311), with which it rests in the bearing bore (7, 107, 207, 307),
the bearing bore (7, 107, 207, 307) forms a longitudinal axis (8),
**characterised in that**
the bore wall (10, 110, 210, 310) of the bearing bore (7, 107, 207, 307) or the outer face (11, 111, 211, 311) of the bearing bushing (9, 109, 209, 309) has an annular groove (12, 112) centred on the longitudinal axis (8), and that the axial retaining arrangement has a retaining ring (13, 113, 213), which
has a first ring portion (14, 114, 214), which is retained in the annular groove (12, 112),
has at least one second ring portion (16, 116, 216) connected to the first ring portion (14, 114, 214), which second ring portion (16, 116, 216) is elastic in the radial direction and forms at least one engagement edge (17, 117, 217), which, depending on the arrangement of the annular groove (12, 112), presses against the bore wall (10, 110, 210, 310) or the outer face (11, 111, 211, 311).

2. Axial retaining arrangement according to claim 1,
**characterised in**
**that** a portion of the bore wall (10) or of the outer face (11) forms a contact portion (18) for the engagement edge (17) of the retaining ring (13), wherein the contact portion (18) has a rough surface or is provided with a knurl or with circumferential grooves (19).

3. Axial retaining arrangement according to claim 1,
**characterised in**
**that** the contact portion (18) does not project over the residual portion of the outer face (11) of the bearing bushing (9) or of the bore wall (10).

4. Axial retaining arrangement according to claim 1,
**characterised in**
**that** the at least one second ring portion (16, 116) having the engagement edge (17, 117) extends relative to the bore wall (10, 110) in the assembled condition with an angle (A), which is larger than 7° and smaller than 90°.

5. Axial retaining arrangement according to claim 1,
**characterised in**
**that** then, when the annular groove (12) is arranged in the bore wall (10, 210) of the bearing bore (7, 207), the engagement edge (17, 217) of the retaining ring (13, 213) faces away from an insertion end (20) of the bearing bore (7, 207), through which the bearing bushing (9, 209) is inserted into the bearing bore (7, 207).

6. Axial retaining arrangement according to claim 1,
**characterised in**
**that** then, when the annular groove (11) is arranged in the outer face (111) of the bearing bushing (109), the engagement edge(s) (117) of the retaining ring (113) face the insertion end (20) of the bearing bore (107), through which the bearing bushing (109) is inserted into the bearing bore (107).

7. Axial retaining arrangement according to claim 1,
**characterised in**
**that** the retaining ring (13, 113, 213) is separated in the direction of the longitudinal axis (7) at one position (15).

8. Axial retaining arrangement according to claim 1,
**characterised in**
**that** the retaining ring (13, 113) is formed from a metal sheet, wherein the at least one second ring portion (16, 116) is bent at an angle relative to the first annular portion (14, 114) forming a V, when seen in a longitudinal section.

9. Axial retaining arrangement according to claim 1,
**characterised in**
**that** the first ring portion (214) is formed solid, to which the at least one second ring portion (216) is connected unitarily.

10. Axial retaining arrangement for a bearing bushing (309) with a through extending bearing bore (307) forming a bore wall (310) of a yoke arm (305) of a joint yoke belonging to a universal joint or a bearing element, wherein the bearing bushing (309) has an outer face (311), with which it rests in the bearing bore (307),
the bearing bore (307) forms a longitudinal axis (8),
the bearing bore (307) forms an insertion end (320) for the bearing bushing (309),
**characterised in that**
the bore wall (310) of the bearing bore (307) is provided in the direction towards the insertion end (320) over the circumference with first teeth (21), offset axially along the longitudinal axis (309) and which tips do not project in the direction towards the longitudinal axis (8) beyond the residual face of the bore wall (310),
and that
the bearing bushing (309) has at a rearward end (22), when seen in an insertion direction in the bearing bore (30), with second teeth (23) on the outer face (311) interacting with the first teeth (21), which second teeth (23) engage between the first teeth (21) and project correspondingly beyond the outer face (311) of the bearing bushing (309) away from the longitudinal axis (8).

## Revendications

1. Dispositif de maintien axial pour un coussinet de palier (9,109,209,309) dans un alésage de palier (7,107,207,307) traversant formant une paroi d'alésage (10,110,210,310) d'un bras de fourche (5,305) d'une fourche articulée (3) appartenant à un joint universel (1) ou d'un élément de palier, dans lequel
- le coussinet de palier (9,109,209,309) présente une surface extérieure (11,111,211,311), avec laquelle il repose dans l'alésage de palier (7,107,207,307),
- l'alésage de palier (7,107,207,307) forme un axe longitudinal (8),
**caractérisé en ce que**
- la paroi d'alésage (10,110,210,310) de l'alésage de palier (7,107,207,307) ou la surface extérieure (11,111,211,311) du coussinet de palier (9,109,209,309) présentent une rainure annulaire (12,112) centrée sur l'axe longitudinal (8), et **en ce que** le dispositif de maintien axial présente une bague de maintien (13,113,213), laquelle
- présente une première portion annulaire (14,114,214), qui est maintenue dans la rainure annulaire (12,112),
- au moins une deuxième portion annulaire (16,116,216) raccordée à la première portion annulaire (14, 114, 214), faisant ressort dans la direction radiale, qui forme au moins une arête de mise en prise (17,117,217), laquelle presse en fonction de l'affectation de l'arête annulaire (12,112) contre la paroi d'alésage (10,110,210,310) ou la surface extérieure (11,111,211,311).

2. Dispositif de maintien axial selon la revendication 1,
**caractérisé en ce que**
une portion de la paroi d'alésage (10) ou de la surface extérieure (11) forme une zone de contact (18) destinée à l'arête de mise en prise (17) de la bague de maintien (13), dans lequel la zone de contact (18) est gravée ou est pourvue d'un striage ou de sillons périphériques (19).

3. Dispositif de maintien axial selon la revendication 1,
**caractérisé en ce que**
la zone de contact (18)ne dépasse pas sur la zone restante de la surface extérieure (11) du coussinet de palier (9) ou de la paroi d'alésage (10).

4. Dispositif de maintien axial selon la revendication 1,
**caractérisé en ce** au moins une deuxième portion annulaire (16,116) présentant l'arête de mise en prise (17,117) s'étend en l'état monté à un angle (A), qui est plus grand que 7° et plus petit que 90°, par rapport à la paroi d'alésage (10,110).

5. Dispositif de maintien axial selon la revendication 1,
**caractérisé en ce que** quand la rainure annulaire (12) est disposée dans la paroi d'alésage (10,210) de l'alésage de palier (7,207), l'arête de mise en prise (17,217) de la bague de maintien (13,213) se détourne d'une extrémité d'insertion (20) de l'alésage de palier (7,207) par l'intermédiaire de laquelle le coussinet de palier (9,209) est inséré dans l'alésage de palier (7,207).

6. Dispositif de maintien axial selon la revendication 1,
**caractérisé en ce que**
quand la rainure annulaire (112) est disposé dans la surface extérieure (111) du coussinet de palier (109), la(les) arête(s) de mise en prise (117) de la bague de maintien (113)est tournée vers une extrémité d'insertion (20) de l'alésage de palier (107) par l'intermédiaire de laquelle le coussinet de palier (109) est inséré dans l'alésage de palier (107).

7. Dispositif de maintien axial selon la revendication 1,
**caractérisé en ce que**
la bague de maintien (13, 113, 213) est séparée dans le sens de l'axe longitudinal (B) à un emplacement (15).

8. Dispositif de maintien axial selon la revendication 1,
**caractérisé en ce que**
la bague de maintien (13,113) est façonnée en tôle, dans lequel au moins une deuxième portion annulaire (16,116) est coudée par rapport à la première portion annulaire (14,114) en formant un V en coupe longitudinale.

9. Dispositif de maintien axial selon la revendication 1,
**caractérisé en ce que**
la première portion annulaire (214) a une configuration massive, à laquelle au moins une deuxième portion annulaire (216) est raccordée en un seul tenant.

10. Dispositif de maintien axial pour un coussinet de palier (309) avec un alésage de palier (307) traversant formant une paroi d'alésage (310) d'un bras de fourche (305) d'une fourche articulée (3) appartenant à un joint universel (1) ou d'un élément de palier, dans lequel
- le coussinet de palier (309) présente une surface extérieure (311), avec laquelle il repose dans l'alésage de palier (307),
- l'alésage de palier (307) forme un axe longitudinal (8),
- l'alésage de palier (307) forme une extrémité d'insertion (305) destinée au coussinet de palier (309),
**caractérisé en ce que**
- la paroi d'alésage (310) de l'alésage de palier (307) est pourvu dans la direction de l'extrémité d'insertion (320) sur la circonférence de premières dents (21) décalées axialement le long de l'axe longitudinal (309), dont les pointes ne dépassent sur la surface restante de la paroi d'alésage (310) dans le sens de l'axe longitudinal (8),
et **en ce que**
- le coussinet de palier (309) présente sur une extrémité (22) arrière vue dans une direction d'insertion dans l'alésage de palier (307) des deuxièmes dents (23) coopérant avec les premières dents (21), qui s'engagent entre les premières dents (21) et dépassent de manière correspondante sur la surface extérieure (311) du coussinet de palier (309) en s'éloignant de l'axe longitudinal (8).
